# EUROPEAN PATENT APPLICATION

(11) **EP 4 836 005 A1**
(43) Date of publication of application: **04.11.2026**
(21) Application number: 24912349.8
(22) Date of filing: 10.12.2024
(51) Int. Cl.: H01M 4/525, H01M 4/36

(54) **POSITIVE ELECTRODE ACTIVE MATERIAL FOR NON-AQUEOUS ELECTROLYTE SECONDARY BATTERY, AND NON-AQUEOUS ELECTROLYTE SECONDARY BATTERY**

(30) Priority: 27.12.2023 JP 2023221289
(71) Applicant: Panasonic Intellectual Property Management Co., Ltd., Kadoma-shi, Osaka 571-0057 (JP)
(72) Inventor: TOGO, Masakazu, Kadoma-shi, Osaka 571-0057 (JP); INOUE, Katsuya, Kadoma-shi, Osaka 571-0057 (JP); OGASAWARA, Takeshi, Kadoma-shi, Osaka 571-0057 (JP)
(74) Representative: Novagraaf International SA
(86) International application number: PCT/JP2024/043637
(87) International publication number: WO 2025/142460

(57) **Abstract**

Provided is a positive electrode active material which contributes to an improvement in the durability of a non-aqueous electrolyte secondary battery. This positive electrode active material included in the non-aqueous electrolyte secondary battery comprises a lithium transition metal composite oxide, wherein: the lithium transition metal composite oxide contains Ni, Ca, and Sr, and contains secondary particles formed by aggregating primary particles, adhered particles including fibrous particles are present on the surfaces of the secondary particles, and the fibrous particles contain at least one among Ca and Sr.

## Description

### TECHNICAL FIELD

The present disclosure relates to a positive electrode active material for a non-aqueous electrolyte secondary battery, and to a non-aqueous electrolyte secondary battery, and in particular to a positive electrode active material for a non-aqueous electrolyte secondary battery which contains Ni in a high concentration, and to a non-aqueous electrolyte secondary battery which uses such a positive electrode active material for a non-aqueous electrolyte secondary battery.

### BACKGROUND

Lithium nickelate (LiNiO₂) has a high energy density, and a lithium-transition metal composite oxide in which a part of Ni is replaced with Co, Al, Mn, or the like is used as a positive electrode active material. However, because side reactions tend to occur between the lithium-transition metal composite oxide and a non-aqueous electrolyte, there is a possibility that the lithium-transition metal composite oxide is degraded with repetition of charging and discharging, and discharge capacity is reduced, and further improvement of durability is desired.

Patent Literature 1 discloses a positive electrode active material for a non-aqueous electrolyte secondary battery which has an α-NaFeO₂ structure, which contains one element or two or more elements selected from the group consisting of Mn, Ni, and Co as a transition metal element, and in which an alkali earth metal and W are present on surfaces of particles of the lithium-transition metal composite oxide.

### CITATION LIST

### PATENT LITERATURE

Patent Literature 1: JP 2018-129221 A

### SUMMARY

Demands for the durability of the secondary batteries are increasing, and a surface protection technique of a lithium-transition metal composite oxide which is the positive electrode active material is becoming an important development issue. After intensive studies, the present inventors have found that the durability can be more significantly improved by letting a fibrous particle which contains at least one of Ca or Sr to be present on surfaces of secondary particles of the lithium-transition metal composite oxide.

An advantage of the present disclosure lies in provision of a positive electrode active material which contributes to improvement of durability of a non-aqueous electrolyte secondary battery.

According to one aspect of the present disclosure, there is provided a positive electrode active material for non-aqueous electrolyte secondary battery, comprising: a lithium-transition metal composite oxide, wherein the lithium-transition metal composite oxide contains Ni, Ca, and Sr, and includes secondary particles formed by aggregation of primary particles, and an adhering particle including a fibrous particle is present on surfaces of the secondary particles, and the fibrous particle contains at least one of Ca or Sr.

According to another aspect of the present disclosure, there is provided a non-aqueous electrolyte secondary battery comprising: a positive electrode containing the positive electrode active material for non-aqueous electrolyte secondary battery; a negative electrode; and a non-aqueous electrolyte.

According to a positive electrode active material for non-aqueous electrolyte secondary battery according to one aspect of the present disclosure, the durability of the non-aqueous electrolyte secondary battery can be improved.

### BRIEF DESCRIPTION OF DRAWINGS

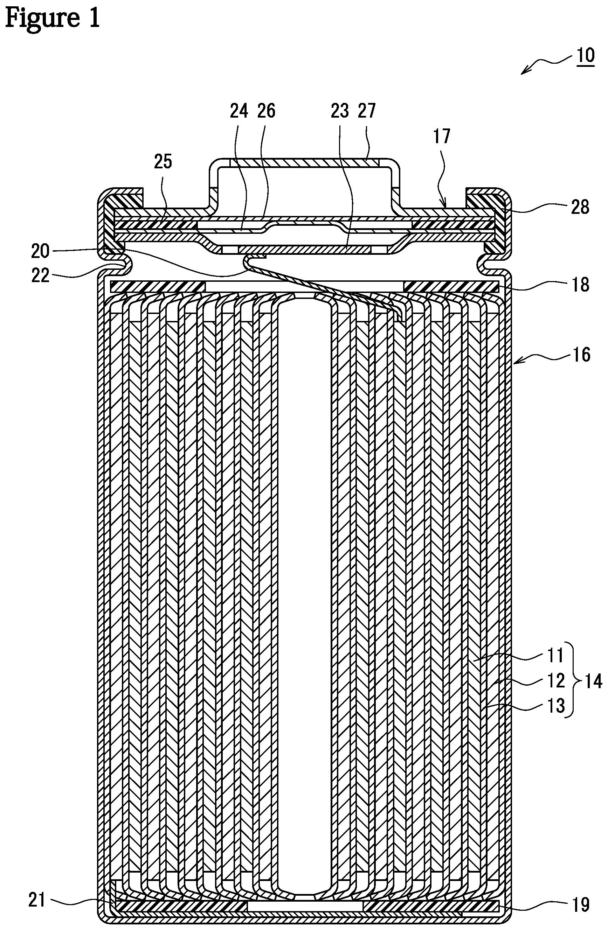

[FIG. 1] is a cross-sectional diagram along a vertical direction of a non-aqueous electrolyte secondary battery according to an embodiment of the present disclosure.

### DESCRIPTION OF EMBODIMENTS

The lithium-transition metal composite oxide has a layered structure, and charge and discharge reactions of the battery progress by Li ions reversibly entering and exiting the layered structure. In general, lithium-transition metal composite oxides having Ni as a primary component are known as positive electrode active materials having high capacity. However, side reactions tend to easily occur between such lithium-transition metal composite oxides and a non-aqueous electrolyte, resulting in tendency of destruction of the layered crystal structure. As a consequence, the positive electrode active material may be degraded after repetition of charging and discharging, and the discharge capacity may be reduced. Moreover, when the battery is to be charged and discharged with a higher charging voltage, the side reactions with the non-aqueous electrolyte become more significant, resulting in progression of the degradation and subsequent reduction of the discharge capacity.

Patent Literature 1 discloses a positive electrode active material for non-aqueous electrolyte secondary battery in which an alkali earth metal and W are provided on surfaces of particles of the lithium-transition metal composite oxide, from the viewpoint of improving durability. However, the demand for improved durability of the secondary battery is increasing, and a further technical development is needed beyond the technique disclosed in Patent Literature 1.

After intensive studies, the present inventors have found that the durability can be more significantly improved by providing a fibrous particle including at least one of Ca and Sr on surfaces of secondary particles of the lithium-transition metal composite oxide. The present inventors have also found that, when both Ca and Sr are present on the surfaces of the secondary particles instead of only one of Ca or Sr, and when a shape of the particle including at least one of Ca and Sr is fibrous, the durability can be particularly improved while maintaining a fluid passing capability without covering the surfaces of the particles.

A non-aqueous electrolyte secondary battery according to an embodiment of the present disclosure will now be described in detail. In the following, a circular cylindrical battery in which an electrode assembly of a wound type is housed in a housing member having a circular cylindrical shape will be exemplified, but the electrode assembly is not limited to the wound type, and may alternatively be a layered type in which a plurality of positive electrodes and a plurality of negative electrodes are alternately layered one by one with a separator therebetween. In addition, the housing member is not limited to the circular cylindrical shape, and may alternatively have, for example, a polygonal shape, a coin shape, or the like, or the housing member may be a battery case formed from a laminated sheet including a metal layer and a resin layer.

FIG. 1 is a cross-sectional diagram along an axial direction of a secondary battery 10 having a circular cylindrical shape according to an embodiment of the present disclosure. As illustrated in FIG. 1, the secondary battery 10 comprises an electrode assembly 14 of a wound type, an electrolyte solution, and a housing member 16 which houses the electrode assembly 14 and the electrolyte. The electrode assembly 14 comprises a positive electrode 11, a negative electrode 12, and a separator 13, and has a wound structure in which the positive electrode 11 and the negative electrode 12 are wound in a spiral shape with the separator 13 therebetween. The housing member 16 is a metal container having a circular cylindrical shape with a bottom and having one end side in an axial direction opened, and the opening of the housing member 16 is closed by a sealing assembly 17. In the following, the side near the sealing assembly 17 of the battery will be referred to as an "upper side", and the side near a bottom of the housing member 16 will be referred to as a "lower side".

The positive electrode 11, the negative electrode 12, and the separator 13 forming the electrode assembly 14 are each an elongated member having a quadrangular shape, and are wound in the spiral shape in a longitudinal direction, so as to be alternately layered in a radial direction of the electrode assembly 14. The separator 13 separates the positive electrode 11 and the negative electrode 12 from each other. The negative electrode 12 is formed in a size slightly larger than the positive electrode 11 in order to prevent precipitation of lithium. That is, the negative electrode 12 is formed to be longer in a longitudinal direction and in a short-side direction than the positive electrode 11. Two separators 13 are formed in a size slightly larger at least than the positive electrode 11, and are disposed, for example, to sandwich the positive electrode 11. The electrode assembly 14 comprises a positive electrode lead 20 connected to the positive electrode 11 by welding or the like, and a negative electrode lead 21 connected to the negative electrode 12 by welding or the like. In the electrode assembly 14, the longitudinal direction of the positive electrode 11 and the negative electrode 12 is the winding direction, and the short-side direction of the positive electrode 11 and the negative electrode 12 is the axial direction. That is, end surfaces in the short-side direction of the positive electrode 11 and the negative electrode 12 form end surfaces in the axial direction of the electrode assembly 14.

Insulating plates 18 and 19 are disposed respectively above and below the electrode assembly 14. In the illustrated example structure of FIG. 1, the positive electrode lead 20 extends through a through hole of the insulating plate 18 toward the side of the sealing assembly 17, and the negative electrode lead 21 extends to the side of the bottom of the housing member 16 through an outer side of the insulating plate 19. The positive electrode lead 20 is connected to a lower surface of an internal terminal plate 23 of the sealing assembly 17 by welding or the like, and a cap 27 which is a top plate of the sealing assembly 17 electrically connected to the internal terminal plate 23 serves as a positive electrode terminal. The negative electrode lead 21 is connected to an inner surface of the bottom of the housing member 16 by welding or the like, and the housing member 16 serves as a negative electrode terminal.

A gasket 28 is provided between the housing member 16 and the sealing assembly 17, so as to secure hermiticity inside the battery. The housing member 16 has a groove portion 22 in which a part of a side surface portion is projected toward an inner side, and which supports the sealing assembly 17. The groove portion 22 is desirably formed in an annular shape along a circumferential direction of the housing member 16, and supports the sealing assembly 17 with the upper surface thereof. The sealing assembly 17 is fixed at an upper part of the housing member 16 by the groove portion 22 and an opening end of the housing member 16 crimped with respect to the sealing assembly 17.

The sealing assembly 17 has a structure in which the internal terminal plate 23, a lower vent member 24, an insulating member 25, an upper vent member 26, and the cap 27 are layered in this order from the side of the electrode assembly 14, and functions as a safety vent. The members of the sealing assembly 17 have, for example, a circular disk shape or a ring shape, and members other than the insulating member 25 are electrically connected to each other. The lower vent member 24 and the upper vent member 26 are connected to each other at respective center parts, and the insulating member 25 interposes between peripheral parts of the vent members. When an internal pressure of the battery increases due to abnormal heat generation, the lower vent member 24 deforms to press the upper vent member 26 upward toward the cap 27 and ruptures, and a current path between the lower vent member 24 and the upper vent member 26 is shut out. When the internal pressure further increases, the upper vent member 26 ruptures, and gas is exhausted from an opening of the cap 27.

The positive electrode 11, the negative electrode 12, the separator 13, and the non-aqueous electrolyte will now be described in detail. In particular, the positive electrode 11 will be described in detail.

### [Positive Electrode]

The positive electrode 11 comprises, for example, a positive electrode current collector and a positive electrode mixture layer formed on a surface of the positive electrode current collector. Desirably, the positive electrode mixture layer is formed on both surfaces of the positive electrode current collector. For the positive electrode current collector, there may be employed a foil of a metal which is stable within a potential range of the positive electrode 11 such as aluminum and an aluminum alloy, a film on a surface layer of which the metal is disposed, or the like. A thickness of the positive electrode current collector is, for example, greater than or equal to 10 µm and less than or equal to 30 µm.

The positive electrode mixture layer contains, for example, a positive electrode active material, a conductive agent, and a binder. A thickness of the positive electrode mixture layer is, for example, greater than or equal to 10 µm and less than or equal to 150 µm on one side of the positive electrode current collector. The positive electrode 11 can be produced, for example, by applying a positive electrode mixture slurry including the positive electrode active material, the conductive agent, and the like on the surfaces of the positive electrode current collector, drying the applied films, and rolling the dried films, to thereby form the positive electrode mixture layers on both surfaces of the positive electrode current collector.

As the conductive agent contained in the positive electrode mixture layer, for example, there may be exemplified carbon-based particles such as carbon black (CB) such as acetylene black (AB) and Ketjenblack, carbon nanotubes (CNT), graphene, graphite, or the like. One of these materials may be used as a single material, or two or more of these materials may be used in combination. A content of the conductive agent in the positive electrode mixture layer is, for example, greater than or equal to 0.1 mass% and less than or equal to 10 mass% with respect to a total mass of the positive electrode mixture layer.

As the binder contained in the positive electrode mixture layer, for example, there may be exemplified a fluororesin such as polytetrafluoroethylene (PTFE), polyvinylidene fluoride (PVDF), or the like, a polyimide-based resin, an acrylic resin, a polyolefin-based resin, polyacrylonitrile (PAN), or the like. One of these materials may be used as a single material or two or more of these materials may be used in combination. A content of the binder in the positive electrode mixture layer is, for example, greater than or equal to 0.1 mass% and less than or equal to 10 mass% with respect to the total mass of the positive electrode mixture layer.

The positive electrode active material contained in the positive electrode mixture layer contains a lithium-transition metal composite oxide. The lithium-transition metal composite oxide contains Ni, Ca, and Sr.

A content of Ni in the lithium-transition metal composite oxide is desirably greater than or equal to 50 mol% with respect to a total number of moles of elements other than Li and O. The content of Ni in the lithium-transition metal composite oxide may be, for example, in the range of 50 mol% ≤ (Content of Ni) ≤ 95 mol% with respect to the total number of moles of elements other than Li and O, may be in the range of 70 mol% ≤ (Content of Ni) ≤ 95 mol%, and may be in the range of 75 mol% ≤ (Content of Ni) ≤ 95 mol%. When the content of Ni is within these ranges, both high capacity and stability of the structure can be achieved. A lower limit value of the Ni content is more desirably 80 mol%, and is further desirably 85 mol%.

A content of Ca in the lithium-transition metal composite oxide is, for example, in the range of 0 mol% < (Content of Ca) ≤ 1 mol% with respect to the total number of moles of elements other than Li and O. A lower limit value of the Ca content is, for example, 0.01 mol%. A content of Sr in the lithium-transition metal composite oxide is, for example, in the range of 0 mol% < (Content of Sr) ≤ 1 mol% with respect to the total number of moles of elements other than Li and O. A lower limit value of the Sr content is, for example, 0.01 mol%. A total of the content of Ca and the content of Sr is, for example, desirably in the range of 0 mol% < (Ca content + Sr content) ≤ 2 mol% with respect to the total number of moles of elements other than Li and O, and more desirably in the range of 0.02 mol% ≤ (Ca content + Sr content) ≤ 2 mol%.

The lithium-transition metal composite oxide is, for example, a composite oxide represented by general formula LiₐNiₓM1_{y}M2_{z}CaₛSrₜO_{2-b} (wherein 0.8≤a≤1.2, 0.50≤x≤0.95, 0≤y<0.50, 0≤z≤0.05, 0<s≤0.01, 0<t≤0.01, 0≤b≤0.05, x+y+z+s+t=1, M1 is at least one element selected from the group consisting of Co, Mn, and Al, and M2 is at least one element selected from the group consisting of W, Nb, Ti, Zr, B, Sb, Si, Fe, Mo, Sn, and Bi). The ratios of the metal elements contained in the lithium-transition metal composite oxide can be measured, for example, by an inductively coupled plasma atomic emission spectroscopy apparatus (ICP-AES).

The lithium-transition metal composite oxide contains a secondary particle formed by aggregation of primary particles. A particle diameter of the primary particle is, for example, greater than or equal to 0.02 µm and less than or equal to 2 µm. The particle diameter of the primary particle is measured as a diameter of a circumscribing circle in a particle image observed by a scanning electron microscope (SEM). An average particle diameter of the secondary particle is, for example, greater than or equal to 2 µm and less than or equal to 30 µm. Here, the average particle size refers to a volume-based median diameter (D50). D50 refers to a particle diameter at which an accumulation of frequencies in a volume-based granularity distribution reaches 50% from the lower particle diameter side, and is also called a middle size. The granularity distribution of the secondary particle can be measured using a granularity distribution measurement apparatus of a laser diffraction type (for example, MT3000II manufactured by MicrotracBEL corporation), and using water as a dispersion medium.

Adhering particles including fibrous particles are present on the surfaces of the secondary particles of the lithium-transition metal composite oxide. The adhering particles are particles adhered to the surfaces of the secondary particles of the lithium-transition metal composite oxide, and which are smaller than the secondary particles. The fibrous particle is one of the adhering particles, and is an elongated particle of a fibrous shape. The fibrous particles may be aggregated, to form adhering particles of a bar shape or a spherical shape. The adhering particles include, in addition to the fibrous particle, a massive particle, for example. Unlike the fibrous particle, the massive particle does not have the elongated shape, and has, for example, a plate shape or a spherical shape.

The fibrous particle includes at least one of Ca and Sr. By the fibrous particle including at least one of Ca and Sr being present on the surfaces of the secondary particles of the lithium-transition metal composite oxide, the durability can be improved. The composition of the fibrous particle is not particularly limited so long as the fibrous particle includes at least one of Ca and Sr, and may be, for example, an oxide, a hydroxide, a carbonate compound, or the like including at least one of Ca and Sr. Alternatively, the fibrous particle may contain both Ca and Sr.

An aspect ratio of the fibrous particle is, for example, greater than or equal to 10. A higher aspect ratio of the fibrous particle tends to result in improved durability of the battery. The aspect ratio of the fibrous particle is desirably greater than or equal to 15, and more desirably greater than or equal to 20. No particular limitation is imposed on an upper limit value of the aspect ratio of the fibrous particle, but the upper limit value is, for example, 100. The aspect ratio of the fibrous particle can be calculated from an image of the fibrous particle obtained by the scanning electron microscope (SEM). More specifically, using an SEM image, for 10 fibrous particles, aspect ratios are respectively obtained by dividing a length of a long side by a length of a short side in a direction perpendicular to the long side, and are averaged, to calculate the aspect ratio of the fibrous particle. The long-side length of the fibrous particle is, for example, less than or equal to 3 µm.

Desirably, each of Ca and Sr is present uniformly on the surfaces of the secondary particles. With such a configuration, the advantage of the improvement of the durability by the fibrous particle can be made more significant. That is, when the fibrous particle containing at least one of Ca and Sr is uniformly present on the surfaces of the secondary particles, the side reactions with the non-aqueous electrolyte can be significantly suppressed. The states of the distributions of Ca and Sr on the surfaces of the secondary particles can be checked, for example, by a Gini coefficient of each element on the surfaces of the secondary particles calculated from an element concentration analysis result of a secondary particle cross section by a time-of-flight secondary ion mass spectrometry apparatus (TOF-SIMS). A smaller Gini coefficient on the secondary particle surface means more uniform dispersion of the element on the surface of the secondary particle, and a minimum value of the Gini coefficient is 0. Desirably, each of the Gini coefficient of Ca on the secondary particle surface and the Gini coefficient of Sr on the secondary particle surface is less than or equal to 0.7. The Gini coefficients of Ca and Sr on the secondary particle surface are, for example, greater than or equal to 0.1.

The Gini coefficient of Ca on the secondary particle surface is a value obtained by doubling an area surrounded by diagonal lines and Lorentz curves when accumulation ratios are represented in the order of intensity for a normalized intensity I_{Ca_OUT} of Ca on the secondary particle surface.

The normalized intensity I_{Ca_OUT} of Ca on the secondary particle surface is obtained using a time-of-flight secondary ion mass spectrometer (TOF-SIMS5 manufactured by IONTOF company), and through a measurement under the following conditions.
Primary Ion: Bi₃⁺
Ion Voltage: 30 kV
Ion Current: 0.03pA@100us
Observation Range: 50 µm x 50 µm
Mass Range: 60 us (~310 amu)
Detection: 4 frames/scan, 150 scans

An image indicating the concentration distribution of Ni and Ca obtained by the above-described measurement is divided into (256x256) pixels, and a detection intensity of each of Ni and Ca is calculated for each pixel. A ratio of the detection intensity of Ca with respect to the detection intensity of Ni is calculated as a normalized intensity I_{Ca}.

A range from the surface of the secondary particle recognized from the above-described image to 0.5 µm in an inner side is recognized as the surface of the secondary particle, and pixels included in this secondary particle surface (hereinafter referred to as "surface pixels" ) are determined. A cluster of I_{Ca} corresponding to the surface pixels is I_{Ca_OUT}. The Gini coefficient of Ca on the secondary particle surface is calculated from I_{Ca_OUT}. A sample for the cross sectional observation may be a sample in which the lithium-transition metal composite oxide is embedded in a resin or the like, or a positive electrode mixture layer containing the lithium-transition metal composite oxide. A normalized intensity I_{Sr_OUT} of Sr on the secondary particle surface is obtained in a manner similar to that for I_{Ca_OUT}. In addition, Ca and Sr may each be uniformly present inside the secondary particle.

The lithium-transition metal composite oxide may have a layered structure. Examples of the layered structure of the lithium-transition metal composite oxide include a layered structure belonging to a space group R-3m and a layered structure belonging to a space group C2/m. Desirably, the lithium-transition metal composite oxide has the layered structure belonging to the space group R-3m from the viewpoints of high capacity and stability of the crystal structure. The layered structure of the lithium-transition metal composite oxide may include a transition metal layer and a Li layer.

The positive electrode mixture layer may contain, in addition to the positive electrode active material of the present embodiment described above, other positive electrode active materials. Examples of the other positive electrode active materials include a lithium-transition metal composite oxide which does not contain Ca or Sr.

Next, an example method of manufacturing the positive electrode active material according to the present embodiment will be described. The manufacturing method of the positive electrode active material includes, for example, a lithium-transition metal composite oxide synthesis step in which a metal oxide containing Ni, a Li compound, a Ca compound, and a Sr compound are mixed and baked to obtain a baked product, a cleaning step in which the baked product is washed with water and dehydrated under predetermined conditions, to obtain a cake-like composition, and a drying step in which the cake-like composition is dried to obtain a powdery composition.

The metal oxide containing at least Ni can be produced by separately dropping, into a reaction tank in which a solution having its pH adjusted is being stirred, a solution of metal salts containing Ni, Co, Al, Mn, or the like, and an alkali solution such as sodium hydroxide, adjusting the pH to the alkali side (for example, 8.5 to 12.5) to precipitate (coprecipitate) a composite hydroxide, and thermally treating the metal hydroxide. No particular limitation is imposed on the baking temperature, and the baking temperature is, for example, in the range of higher than or equal to 250°C and lower than or equal to 600°C.

Then, the metal oxide containing at least Ni, the Li compound, the Ca compound, and the Sr compound are mixed to obtain a mixture. Examples of the Li compound include Li₂CO₃, LiOH, Li₂O₂, Li₂O, LiNO₃, LiNO₂, Li₂SO₄, LiOH·H₂O, LiH, LiF, and the like. Examples of the Ca compound include Ca(OH)₂, CaHPO₄, Ca(H₂PO₄)₂, Ca₃(PO₄)₂, CaO, CaCO₃, CaSO₄, Ca(NO₃)₂, CaCl₂, CaAlO₄, and the like. Examples of the Sr compound include Sr(OH)₂, SrHPO₄, Sr(H₂PO₄)₂, Sr₃(PO₄)₂, SrO, SrCO₃, SrSO₄, Sr(NO₃)₂, SrCl₂, SrAlO₄, and the like. Alternatively, an M2 compound may be mixed in the mixing process. Examples of the Me compound include ZrO₂, Nb₂O_{5,} Nb₂O₅·nH₂O, TiO₂, Ti(OH)₄, SiO, SiO₂, Li₂MoO₄, MoO₃, H₂MoO₄, WO₃, Li₂WO₄, Fe(OH)₂, Fe₂O₃, SnO₂, Bi(OH)₃, Bi₂O₃, H₃BO₃, B₂O₃, Sb₂O₃, and the like.

By baking the above-described mixture, a baked product is obtained. The mixture is baked, for example, in an oxygen stream of an oxygen concentration of greater than or equal to 60%, and with a flow rate of the oxygen stream in a range of greater than or equal to 0.1 L/min and less than or equal to 4 L/min per 10 cm³ of the baking furnace or in a range of greater than or equal to 1L/min per 1 kg of the mixture. A first setting temperature in the baking condition is set to be lower than or equal to 450°C, a retention time of the first setting temperature is in a range of longer than or equal to 0 hour and shorter than or equal to 8 hours, and a temperature-increasing rate at the temperature of lower than or equal to 450°C is greater than 1.5°C/min and less than or equal to 6.0°C/min. A second setting temperature is set to be higher than or equal to 450°C and lower than or equal to 680°C, a retention time of the second setting temperature is in a range of longer than or equal to 0 hour and shorter than or equal to 8 hours, and a temperature-increasing rate at the temperature of higher than or equal to 450°C and lower than or equal to 680°C is greater than 1.0°C/min and less than or equal to 4.5°C/min. A highest reaching temperature is in a range of higher than or equal to 690°C and lower than or equal to 900°C. A temperature-increasing rate from the temperature of higher than 680°C to the highest reaching temperature may be, for example, greater than or equal to 0.1°C/min and less than or equal to 3.5°C/min. A retention time of the highest reaching temperature may be longer than or equal to 1 hour and shorter than or equal to 10 hours. The baking step may be multi-stage baking, and a plurality of the steps may be set for each temperature range within the ranges defined above.

By water-washing, dehydrating, and drying the baked product, the lithium-transition metal composite oxide serving as the positive electrode active material is obtained. The water wash step is performed under conditions, for example, using a reaction container of 3L, with a solid-to-liquid ratio of greater than or equal to 500 g/L and less than or equal to 2000 g/L, a water wash time of longer than or equal to 5 minutes and shorter than or equal to 1 hour, and a stirring rate of greater than or equal to 200 rpm. When the size of the reaction container is changed, the water wash time and the stirring rate may be changed. A water content of the cake-like composition obtained by the dehydration is, for example, less than or equal to 10%, and may be less than or equal to 8%. The drying step is performed under conditions, for example, with a pressure of less than or equal to 1 kPa, a temperature of higher than or equal to 120°C and lower than or equal to 300°C, and a time of longer than or equal to 1 hour and shorter than or equal to 10 hours. More desirable conditions of the drying step are a pressure of less than or equal to 100 Pa, a temperature of higher than or equal to 150°C and lower than or equal to 250°C, and a time of longer than or equal to 1 hour and shorter than or equal to 5 hours.

The lithium-transition metal composite oxide may further be thermally treated. The thermal treatment step is performed, for example, in a vacuum, an oxygen stream, or atmospheric air, with a temperature of higher than or equal to 150°C and lower than or equal to 600°C. During the thermal treatment step, for example, tungsten oxide (WO₃), lithium tungstate (Li₂WO₄, Li₄WO₅, Li₆W₂O₉), boric acid (H₃BO₃), lithium borate (Li₂B₄O₇, Li₃BO₃, LiB₃O₅, LiBO₂), lithium phosphate (Li₃₋ₓHₓPO₄, wherein 0≤x≤3), or the like may be added.

### [Negative Electrode]

The negative electrode 12 may comprise, for example, a negative electrode current collector, and a negative electrode mixture layer formed on a surface of the negative electrode current collector, or a metal Li foil may be used as the negative electrode 12. Alternatively, the negative electrode 12 may have the negative electrode current collector, and lithium metal may precipitate on the surface of the negative electrode current collector by charging. When the negative electrode 12 has the negative electrode mixture layer, the negative electrode mixture layers are desirably formed on both surfaces of the negative electrode current collector. For the negative electrode current collector, there may be employed a foil of a metal which is stable within a potential range of the negative electrode 12 such as copper, a copper alloy, or the like, a film on a surface layer of which the metal is placed, or the like. A thickness of the negative electrode current collector is, for example, greater than or equal to 5 µm and less than or equal to 30 µm. The negative electrode mixture layer contains, for example, a negative electrode active material and a binder. A thickness of the negative electrode mixture layer is, for example, greater than or equal to 10 µm and less than or equal to 150 µm on one side of the negative electrode current collector. The negative electrode 12 can be produced, by example, by applying a negative electrode mixture slurry including the negative electrode active material, the binder, and the like, on the surface of the negative electrode current collector, drying the applied films, and rolling the dried films, to thereby form the negative electrode mixture layers on both surfaces of the negative electrode current collector.

No particular limitation is imposed on the negative electrode active material contained in the negative electrode mixture layer so long as the material can reversibly occlude and release lithium ions, and in general, a carbon material such as graphite is used. Graphite may be any of natural graphite such as flaky graphite, massive graphite, and amorphous graphite, and artificial graphite such as massive artificial graphite, and graphitized meso-phase carbon microbeads. Alternatively, as the negative electrode active material, a metal which forms an alloy with Li such as Si and Sn, a metal compound including Si, Sn, or the like, a lithium-titanium composite oxide, or the like may be employed. Alternatively, these materials with a carbon coating may be employed. For example, a Si-containing compound represented by SiOₓ (wherein 0.5≤x≤1.6), a Si-containing compound in which fine particles of Si are dispersed in a lithium silicate phase and represented by Li_{2y}SiO_{(2+y)} (wherein 0<y<2), or the like may be used in combination with graphite.

As the binder contained in the negative electrode mixture layer, for example, there may be exemplified styrene butadiene rubber (SBR), nitril-butadiene rubber (NBR), carboxymethylcellulose (CMC) or a salt thereof, polyacrylic acid (PAA) or a salt thereof (PAA-Na, PAA-K, or the like, or a partially neutralized salt), and polyvinyl alcohol (PVA). One of these materials may be used as a single material, or two or more of these materials may be used in combination.

### [Separator]

For the separator 13, a porous sheet having ion permeability and an insulating property is employed. Specific examples of the porous sheet include a microporous thin film, a woven fabric, a non-woven fabric, or the like. As a material forming the separator 13, desirably, polyolefin such as polyethylene and polypropylene, cellulose, or the like is employed. The separator 13 may have a single-layer structure or a multilayer structure. On a surface of the separator 13, a resin layer of a high heat resistivity, such as an aramid resin, or the like, may be formed.

A filler layer containing a filler of inorganic materials may be formed at an interface between the separator 13 and the positive electrode 11 and/or at an interface between the separator 13 and the negative electrode 12. As the filler of the inorganic materials, there may be exemplified oxides containing metal elements such as Ti, Al, Si, Mg, or the like, phosphate compounds, or the like. The filler layer can be formed by applying a slurry containing the filler on a surface of the positive electrode 11, the negative electrode 12, or the separator 13.

### [Non-aqueous Electrolyte]

The non-aqueous electrolyte has, for example, lithium ion conductivity. The non-aqueous electrolyte may be a liquid-state electrolyte (electrolyte solution) or a solid electrolyte.

The liquid-state electrolyte (electrolyte solution) contains, for example, a non-aqueous solvent and an electrolyte salt dissolved in the non-aqueous solvent. For the non-aqueous solvent, for example, esters, ethers, nitriles such as acetonitrile, amides such as dimethylformamide, or a mixture solvent of two or more of these solvents may be employed. The non-aqueous solvent may include a halogen-substituted product in which at least a part of hydrogens of the solvent described above is substituted with a halogen atom such as fluorine. Examples of the halogen-substituted product include fluorinated cyclic carbonates such as fluoroethylene carbonate (FEC), fluorinated chain carboxylic acid esters such as fluorinated chain carbonate and fluoromethyl propionate (FMP), or the like.

Examples of the esters include cyclic carbonates such as ethylene carbonate (EC), propylene carbonate (PC), and butylene carbonate, chain carbonates such as dimethyl carbonate (DMC), ethylmethyl carbonate (EMC), diethyl carbonate (DEC), methylpropyl carbonate, ethylpropyl carbonate, and methylisopropyl carbonate, cyclic carboxylic acid esters such as γ-butyrolactone (GBL) and γ-valerolactone (GVL), and chain carboxylic acid esters such as methyl acetate, ethyl acetate, propyl acetate, methyl propionate (MP), and ethyl propionate (EP).

Examples of the ethers include cyclic ethers such as 1,3-dioxolane, 4-methyl-1,3-dioxolane, tetrahydrofuran, 2-methyl tetrahydrofuran, propylene oxide, 1,2-butylene oxide, 1,3-dioxane, 1,4-dioxane, 1,3,5-trioxane, furan, 2-methyl furan, 1,8-cineol, and crown ether, and chain ethers such as 1,2-dimethoxy ethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxy toluene, benzyl ethyl ether, diphenyl ether, dibenzyl ether, o-dimethoxy benzene, 1,2-diethoxy ethane, 1,2-dibutoxy ethane, diethylene glycol dimethyl ether, diethylene glycol diethyl ether, diethylene glycol dibutyl ether, 1,1-dimethoxy methane, 1,1-diethoxy ethane, triethylene glycol dimethyl ether, and tetraethylene glycol dimethyl ether.

The electrolyte salt is desirably a lithium salt. Examples of the lithium salts include LiClO₄, LiBF₄, LiPF₆, LiAlCl₄, LiSbF₆, LiSCN, LiCF₃SO₃, LiCF₃CO₂, LiAsF₆, LiB₁₀Cl₁₀, lithium lower aliphatic carboxylate, LiCl, LiBr, LiI, phosphate salts, borate salts, and imide salts. Examples of the phosphate salts include lithium difluorophosphate (LiPO₂F₂), lithium difluoro bis(oxalate)phosphate (LiDFBOP), lithium tetrafluoro(oxalate) phosphate, and the like. Examples of the borate salts include lithium bis(oxalate) borate (LiBOB), lithium difluoro(oxalate) borate (LiDFOB), and the like. Examples of the imide salts include lithium bisfluorosulfonyl imide LiN(FSO₂)₂), lithium bistrifluoromethane sulfonate imide (LiN(CF₃SO₂)₂), lithium trifluoromethane sulfonate nonafluorobutane sulfonate imide (LiN(CF₃SO₂)(C₄F₉SO₂)), lithium bispentafluoroethane sulfonate imide (LiN(C₂F₆SO₂)₂), and the like. Of these, from viewpoints of ion conductivity, electrochemical stability, and the like, LiPF₆ is desirably employed. A concentration of the lithium salt may be, for example, less than or equal to 4 mols per 1L of the non-aqueous solvent, may be less than or equal to 3 mols per 1L of the non-aqueous solvent, may desirably be less than or equal to 1.8 moles per 1L of the non-aqueous solvent, and may more desirably be greater than or equal to 0.8 mols and less than or equal to 1.8 mols per 1L of the non-aqueous solvent.

The non-aqueous electrolyte may contain an additive. Examples of the additive include unsaturated carbonates, acid anhydrides, phenol compounds, benzene compounds, nitrile compounds, isocyanate compounds, sultone compounds, sulfate compounds, borate ester compounds, phosphate ester compounds, phosphite ester compounds, and the like.

Examples of unsaturated cyclic carbonate include vinylene carbonate, 4-methyl vinylene carbonate, 4,5-dimethyl vinylene carbonate, 4-ethyl vinylene carbonate, 4,5-diethyl vinylene carbonate, 4-propyl vinylene carbonate, 4,5-dipropyl vinylene carbonate, 4-phenyl vinylene carbonate, 4,5-diphenyl vinylene carbonate, vinyl ethylene carbonate, divinyl ethylene carbonate, and the like. The unsaturated cyclic carbonate may be used as a single material, or two or more unsaturated cyclic carbonates may be used in combination. Alternatively, the unsaturated cyclic carbonate may have a part of hydrogen atoms substituted with a fluorine atom. The acid anhydride may be an anhydride in which a plurality of carboxylic acid molecules are condensed between molecules, but is desirably an acid anhydride of polycarboxylic acid. Examples of the acid anhydride of polycarboxylic acid include, for example, succinic anhydride, maleic anhydride, phthalic anhydride, and the like.

Examples of the phenol compound include phenol, hydroxy toluene, and the like. Examples of the benzene compound include fluorobenzene, hexafluorobenzene, cyclohexylbenzene (CHB), and the like.

Examples of the nitrile compound include adiponitrile, pimelonitrile, propionitrile, succinonitrile, and the like. Examples of the isocyanate compound include methyl isocyanate (MIC), diphenyl methane diisocyanate (MDI), hexamethylene diisocyanate (HDI), toluene diisocyanate (TDI), isophorone diisocyanate (IPDI), bisisocyanate methyl cyclohexane (BIMCH), and the like. Examples of the sultone compound include propane sultone, propene sultone, and the like. Examples of the sulfate compound include ethylene sulfate, ethylene sulfite, dimethyl sulfate, lithium fluorosulfate, and the like. Examples of the borate ester compound include trimethyl borate, tris(trimethylsilyl) borate, and the like. Examples of the phosphate ester compound include trimethyl phosphate, tris(trimethylsilyl) phosphate, and the like. Examples of the phosphite ester compound include trimethyl phosphite, tris(trimethylsilyl) phosphite, and the like.

As the solid electrolyte, for example, there may be employed a solid-state or gel-state polymer electrolyte, an inorganic solid electrolyte, or the like. As the inorganic solid electrolyte, for example, materials known in the field of an all-solid-state lithium ion secondary battery or the like (such as, for example, an oxide-based solid electrolyte, a sulfide-based solid electrolyte, a halogen-based solid electrolyte) may be employed. For example, the polymer electrolyte contains a lithium salt and a matrix polymer, or contains a non-aqueous solvent, the lithium salt, and the matrix polymer. As the matrix polymer, for example, a polymer material which absorbs the non-aqueous solvent and forms a gel is used. As the polymer material, there may be exemplified a fluororesin, an acrylic resin, a polyether resin, or the like.

### EXAMPLES

The present disclosure will now be further described with reference to Examples and Comparative Examples. However, the present disclosure is not limited to Examples described below.

### <Example 1-1>

### [Production of Positive Electrode Active Material]

A composite hydroxide obtained by coprecipitation and represented by [Ni_{0.91}Co_{0.04}Al_{0.05}](OH)₂ was baked at 400°C for 8 hours, to obtain a metal oxide including Ni, Co, and Al. Then, the metal oxide, Ca(OH)₂, and Sr(OH)² were mixed such that a molar ratio of Ca with respect to a total amount of the metal elements was 0.3 mol% and a molar ratio of Sr was 0.1 mol%, and lithium hydroxide-hydrate (LiOH·H₂O) was mixed to the mixture such that a molar ratio of Li with respect to a total amount of Ni, Co, Al, Ca, and Sr was 103 mol%, to obtain a mixture. The mixture was placed in an oxygen stream of an oxygen concentration of 95% (flow rate of 3 L/min per 1 kg of the mixture), and the temperature was increased from the room temperature to 400°C with a temperature-increasing rate of 4°C/min, and then increased from 400°C to 650°C with a temperature-increasing rate of 2°C/min. Then, the temperature was increased from 650°C to 740°C with a temperature-increasing rate of 1°C/min, and was retained for 6 hours, to obtain a baked product. Using a reaction container of 3 L, the baked product was added to water with a solid-to-liquid ratio of 500 g/L, was water-washed with a stirring rate of 300 rpm for 10 minutes, and was dehydrated. The product was then dried at a temperature of 180°C, under a vacuum atmosphere with a pressure of 10 Pa, for 2 hours, to obtain a positive electrode active material of Example 1-1.

As a result of measurement of the obtained positive electrode active material using an ICP atomic emission spectroscopy apparatus (iCAP6300 manufactured by Thermo Fisher Scientific Inc.), it was found that elements shown in Table 1 described below were present as elements other than Li and O. Through observation with a scanning electron microscope (SEM), it was found that adhering particles of fibrous shape having a long-side length of 0.3 µm and an aspect ratio of 40 were adhered to the surfaces of the secondary particles of the positive electrode active material. As a result of measurement of the element concentration distribution on the surface of the positive electrode active material through the time-of-flight secondary ion mass spectrometry (TOF-SIMS), Ca and Sr were detected, and it was found that the Gini coefficients of Ca and Sr on the secondary particle surface were 0.60 and 0.58, respectively.

### [Production of Positive Electrode]

95 parts by mass of the positive electrode active material descried above, 3 parts by mass of acetylene black (AB), and 2 parts by mass of polyvinylidene fluoride (PVDF) were mixed, and a suitable amount of N-methyl-2-pyrrolidone (NMP) was added, to prepare a positive electrode mixture slurry. Then, the positive electrode mixture slurry was applied on both surfaces of a positive electrode current collector formed from an aluminum foil, the applied film was dried and rolled with a rolling roller, and the product was cut in a predetermined electrode size, to produce a positive electrode. An exposed part at which a surface of the positive electrode current collector was exposed was provided on a part of the positive electrode.

### [Production of Negative Electrode]

Natural graphite was used as the negative electrode active material. The negative electrode active material, carboxymethylcellulose-sodium (CMC-Na), and styrenebutadiene rubber (SBR) were mixed with a solid content mass ratio of 100:1:1 in an aqueous solution, to prepare a negative electrode mixture slurry. Then, the negative electrode mixture slurry was applied on both surfaces of a negative electrode current collector formed from a copper foil, the applied film was dried and rolled with a rolling roller, and the product was cut in a predetermined electrode size, to produce a negative electrode. An exposed part at which a surface of the negative electrode current collector was exposed was provided at a part of the negative electrode.

### [Preparation of Non-aqueous Electrolyte]

Ethylene carbonate (EC), ethylmethyl carbonate (EMC), and dimethyl carbonate (DMC) were mixed with a volume ratio of 3:3:4. Lithium hexafluorophosphate (LiPF₆) was dissolved in the mixture solvent in a concentration of 1.2 mol/liter, to prepare a non-aqueous electrolyte.

### [Production of Test Cell]

A positive electrode lead was attached to the exposed part of the positive electrode, and a negative electrode lead was attached to the exposed part of the negative electrode. The positive electrode and the negative electrode were wound in a spiral shape with a separator made of polyolefin therebetween, and the assembly was press formed in a radial direction, to produce a wound-type electrode assembly having a flat shape. The electrode assembly was housed in a housing member formed from aluminum laminated sheets, the non-aqueous electrolyte was injected, and then, an opening of the housing member was sealed, to obtain a test cell.

### [Evaluation of Durability]

Under an environmental temperature of 45°C, the test cell was charged with a constant current of 0.3C until the voltage reached 4.2V, and was then charged with a constant voltage of 4.2V until the current reached 0.02C. Then, the test cell was discharged with a constant current of 0.5C until the voltage reached 2.5V. With these charging and discharging processes as one cycle, 200 cycles of charging and discharging were performed. The durability of the test cell was determined based on the following formula. $Durability = \left(\left(discharge capacity at 200th cycle\right)/\left(discharge capacity at 1st cycle\right)\right) * 100$

### <Example 1-2>

A test cell was produced in a manner similar to Example 1-1 except that the positive electrode active material was produced in the following manner, and the test cell was evaluated. In the element concentration distribution measurement of the positive electrode active material surface through TOF-SIMS, Al was detected together with Ca and Sr.
(1) In the baking step, Ca(OH)₂, Sr(OH)₂, and ZrO₂ were added such that the molar ratio of Ca with respect to the total amount of metal elements was 0.3 mol%, the molar ratio of Sr was 0.1 mol%, and the molar ratio of Zr was 0.1 mol%.
(2) In the water-wash step, the solid-to-liquid ratio was changed to 750 g/L.

### <Example 1-3>

A test cell was produced in a manner similar to Example 1-1 except that the positive electrode active material was produced in the following manner, and the test cell was evaluated.
(1) In the baking step, Ca(OH)₂, Sr(OH)₂, and TiO₂ were added such that the molar ratio of Ca with respect to the total amount of metal elements was 0.3 mol%, the molar ratio of Sr was 0.1 mol%, and the molar ratio of Ti was 0.1 mol%.
(2) In the water-wash step, the solid-to-liquid ratio was changed to 1000 g/L.

### <Example 1-4>

A test cell was produced in a manner similar to Example 1-1 except that the positive electrode active material was produced in the following manner, and the test cell was evaluated.
(1) In the baking step, Ca(OH)₂, Sr(OH)₂, and WO₃ were added such that the molar ratio of Ca with respect to the total amount of metal elements was 0.3 mol%, the molar ratio of Sr was 0.1 mol%, and the molar ratio of W was 0.1 mol%.
(2) In the water-wash step, the solid-to-liquid ratio was changed to 1500 g/L.

### <Example 1-5>

A test cell was produced in a manner similar to Example 1-1 except that the positive electrode active material was produced in the following manner, and the test cell was evaluated.
(1) In the baking step, Ca(OH)₂, Sr(OH)₂, and Nb₂O₅ were added such that the molar ratio of Ca with respect to the total amount of metal elements was 0.3 mol%, the molar ratio of Sr was 0.1 mol%, and the molar ratio of Nb was 0.3 mol%.
(2) In the water-wash step, the solid-to-liquid ratio was changed to 1000 g/L, and the water-wash time was changed to 20 minutes.

### <Comparative Example 1-1>

A test cell was produced in a manner similar to Example 1-1 except that, in the production of the positive electrode active material, Sr was not added, and, in the baking step, Ca(OH)₂ was added such that the molar ratio of Ca with respect to the total amount of the metal elements was 0.5 mol%, and the test cell was evaluated. Through the SEM observation, it was found that adhering particles of massive shape having a long-side length of 0.5 µm and an aspect ratio of 1 were adhered to the surfaces of the secondary particles of the positive electrode active material.

### <Comparative Example 1-2>

A test cell was produced in a manner similar to Example 1-1 except that, in the production of the positive electrode active material, Ca was not added, and, in the baking step, Sr(OH)₂ was added such that the molar ratio of Sr with respect to the total amount of the metal elements was 0.2 mol%, and the test cell was evaluated.

### <Example 2-1>

A test cell was produced in a manner similar to Example 1-1 except that the positive electrode active material was produced in the following manner, and the test cell was evaluated.
(1) A composite hydroxide represented by [Ni_{0.90}Co_{0.05}Mn_{0.05}](OH)₂ was used, and a metal oxide including Ni, Co, and Mn was obtained.
(2) In the baking step, Ca(OH)₂ and Sr(OH)₂ were added such that the molar ratio of Ca with respect to the total amount of metal elements was 0.5 mol% and the molar ratio of Sr was 0.1 mol%, and lithium hydroxide was mixed such that the molar ratio of Li with respect to the total amount of Ni, Co, Mn, Ca, and Sr was 105 mol%.

As a result of measurement of the obtained positive electrode active material using the ICP atomic emission spectroscopy apparatus (iCAP6300 manufactured by Thermo Fisher Scientific Inc.), it was found that elements shown in Table 2 described below were present as elements other than Li and O. Through observation with the scanning electron microscope (SEM), it was found that adhering particles of fibrous shape having a long-side length of 0.27 µm and an aspect ratio of 30 were adhered to the surfaces of the secondary particles of the positive electrode active material. As a result of measurement of the element concentration distribution on the surface of the positive electrode active material through the time-of-flight secondary ion mass spectrometry (TOF-SIMS), Ca and Sr were detected, and it was found that the Gini coefficients of Ca and Sr on the secondary particle surface were 0.59 and 0.58, respectively.

### <Example 2-2>

A test cell was produced in a manner similar to Example 2-1 except that, in the baking step of the production of the positive electrode active material, Ca(OH)₂, Sr(OH)₂, and ZrO₂ were added such that the molar ratio of Ca with respect to the total amount of metal elements was 0.5 mol%, the molar ratio of Sr was 0.2 mol%, and the molar ratio of Zr was 0.5 mol%, and the test cell was evaluated.

### <Example 2-3>

A test cell was produced in a manner similar to Example 2-1 except that the positive electrode active material was produced in the following manner, and the test cell was evaluated.
(1) In the baking step, Ca(OH)₂, Sr(OH)₂, and Nb₂O₅ were added such that the molar ratio of Ca with respect to the total amount of metal elements was 0.5 mol%, the molar ratio of Sr was 0.2 mol%, and the molar ratio of Nb was 0.5 mol%.
(2) In the water-wash step, the solid-to-liquid ratio was changed to 750 g/L.

### <Example 2-4>

A test cell was produced in a manner similar to Example 2-1 except that the positive electrode active material was produced in the following manner, and the test cell was evaluated.
(1) In the baking step, Ca(OH)₂, Sr(OH)₂, and TiO₂ were added such that the molar ratio of Ca with respect to the total amount of metal elements was 1.0 mol%, the molar ratio of Sr was 0.1 mol%, and the molar ratio of Ti was 0.5 mol%.
(2) In the water-wash step, the solid-to-liquid ratio was changed to 1000 g/L, and the water-wash time was changed to 20 minutes.

### <Example 2-5>

A test cell was produced in a manner similar to Example 2-1 except that the positive electrode active material was produced in the following manner, and the test cell was evaluated.
(1) In the baking step, Ca(OH)₂, Sr(OH)₂, and TiO₂ were added such that the molar ratio of Ca with respect to the total amount of metal elements was 0.5 mol%, the molar ratio of Sr was 0.1 mol%, and the molar ratio of Ti was 0.5 mol%.
(2) In the water-wash step, the solid-to-liquid ratio was changed to 1500 g/L, and the water-wash time was changed to 20 minutes.
(3) H₃BO₃ was mixed to the lithium-transition metal composite oxide obtained in the water-wash step such that a molar ratio of B with respect to a total amount of Ni, Co, Mn, Ca, Sr, and Ti was 0.5 mol%, and a thermal treatment was applied in an oxygen stream at 300°C.

### <Example 2-6>

A test cell was produced in a manner similar to Example 2-1 except that the positive electrode active material was produced in the following manner, and the test cell was evaluated. In the element concentration distribution measurement of the positive electrode active material surface through TOF-SIMS, B was detected together with Ca and Sr.
(1) In the baking step, Ca(OH)₂, Sr(OH)₂, and ZrO₂ were added such that the molar ratio of Ca with respect to the total amount of metal elements was 0.5 mol%, the molar ratio of Sr was 0.1 mol%, and the molar ratio of Zr was 0.3 mol%.
(2) In the water-wash step, the solid-to-liquid ratio was changed to 1500 g/L, and the water-wash time was changed to 20 minutes.
(3) H₃BO₃ was mixed to the lithium-transition metal composite oxide obtained in the water-wash step such that the molar ratio of B with respect to a total amount of Ni, Co, Mn, Ca, Sr, and Zr was 0.5 mol%, and a thermal treatment was applied in an oxygen stream at 300°C.

### <Comparative Example 2-1>

A test cell was produced in a manner similar to Example 2-1 except that, in the production of the positive electrode active material, Sr was not added, and, in the baking step, Ca(OH)₂ was added such that the molar ratio of Ca with respect to the total amount of the metal elements was 0.5 mol%, and the test cell was evaluated. Through the SEM observation, it was found that adhering particles of massive shape having a long-side length of 0.5 µm and an aspect ratio of 1.5 were adhered to the surfaces of the secondary particles of the positive electrode active material.

### <Comparative Example 2-2>

A test cell was produced in a manner similar to Example 2-1 except that, in the production of the positive electrode active material, Ca was not added, and, in the baking step, Sr(OH)₂ was added such that the molar ratio of Sr with respect to the total amount of the metal elements was 0.5 mol%, and the test cell was evaluated.

### <Comparative Example 2-3>

A test cell was produced in a manner similar to Example 2-1 except that the positive electrode active material was produced in the following manner, and the test cell was evaluated.
(1) In the baking step, Ca(OH)₂, Sr(OH)₂, and Nb₂O₅ were added such that the molar ratio of Ca with respect to the total amount of metal elements was 0.5 mol%, the molar ratio of Sr was 0.1 mol%, and the molar ratio of Nb was 0.5 mol%.
(2) In the water-wash step, the water-wash time was changed to 1 minute, and the stirring rate was changed to 100 rpm.

### <Comparative Example 2-4>

A test cell was produced in a manner similar to Example 2-1 except that the positive electrode active material was produced in the following manner, and the test cell was evaluated.
(1) In the baking step, Ca(OH)₂, Sr(OH)₂, and TiO₂ were added such that the molar ratio of Ca with respect to the total amount of metal elements was 0.5 mol%, the molar ratio of Sr was 0.2 mol%, and the molar ratio of Ti was 0.5 mol%.
(2) In the water-wash step, the water-wash time was changed to 1 minute.

### <Comparative Example 2-5>

A test cell was produced in a manner similar to Example 2-1 except that the positive electrode active material was produced in the following manner, and the test cell was evaluated.
(1) In the baking step, Ca(OH)₂, Sr(OH)₂, and ZrO₂ were added such that the molar ratio of Ca with respect to the total amount of metal elements was 1 mol%, the molar ratio of Sr was 0.1 mol%, and the molar ratio of Zr was 0.5 mol%.
(2) In the water-wash step, the solid-to-liquid ratio was changed to 1500 g/L, and the stirring rate was changed to 100 rpm.

### <Example 3-1>

A test cell was produced in a manner similar to Example 1-1 except that the positive electrode active material was produced in the following manner, and the test cell was evaluated.
(1) A composite hydroxide represented by [Ni_{0.90}Mn_{0.10}](OH)₂ was used, and a metal oxide including Ni and Mn was obtained.
(2) In the baking step, Ca(OH)₂ and Sr(OH)₂ were added such that the molar ratio of Ca with respect to the total amount of metal elements was 0.5 mol% and the molar ratio of Sr was 0.2 mol%, and lithium hydroxide was mixed such that the molar ratio of Li with respect to a total amount of Ni, Mn, Ca, and Sr was 109 mol%.

As a result of measurement of the obtained positive electrode active material using the ICP atomic emission spectroscopy apparatus (iCAP6300 manufactured by Thermo Fisher Scientific Inc.), it was found that elements shown in Table 3 described below were present as elements other than Li and O. Through observation with the scanning electron microscope (SEM), it was found that adhering particles of fibrous shape having a long-side length of 0.4 µm and an aspect ratio of 12 were adhered to the surfaces of the secondary particles of the positive electrode active material. As a result of measurement of the element concentration distribution on the surface of the positive electrode active material through the time-of-flight secondary ion mass spectrometry (TOF-SIMS), Ca and Sr were detected, and it was found that the Gini coefficients of Ca and Sr on the secondary particle surface were 0.55 and 0.62, respectively.

### <Example 3-2>

A test cell was produced in a manner similar to Example 3-1 except that, in the baking step of the production of the positive electrode active material, Ca(OH)₂, Sr(OH)₂, and WO₃ were added such that the molar ratio of Ca with respect to the total amount of metal elements was 0.5 mol%, the molar ratio of Sr was 0.1 mol%, and the molar ratio of W was 0.5 mol%, and the test cell was evaluated.

### <Example 3-3>

A test cell was produced in a manner similar to Example 3-1 except that the positive electrode active material was produced in the following manner, and the test cell was evaluated.
(1) In the baking step, Ca(OH)₂, Sr(OH)₂, and Nb₂O₅ were added such that the molar ratio of Ca with respect to the total amount of metal elements was 0.5 mol%, the molar ratio of Sr was 0.1 mol%, and the molar ratio of Nb was 0.5 mol%.
(2) In the water-wash step, the solid-to-liquid ratio was changed to 750 g/L.

### <Example 3-4>

A test cell was produced in a manner similar to Example 3-1 except that the positive electrode active material was produced in the following manner, and the test cell was evaluated. In the element concentration distribution measurement of the positive electrode active material surface through TOF-SIMS, B was detected together with Ca and Sr.
(1) In the baking step, Ca(OH)₂, Sr(OH)₂, and TiO₂ were added such that the molar ratio of Ca with respect to the total amount of metal elements was 1 mol%, the molar ratio of Sr was 0.2 mol%, and the molar ratio of Ti was 0.3 mol%.
(2) In the water-wash step, the solid-to-liquid ratio was changed to 1000 g/L, and the water-wash time was changed to 20 minutes.
(3) H₃BO₃ was mixed to the lithium-transition metal composite oxide obtained in the water-wash step such that a molar ratio of B with respect to a total amount of Ni, Mn, Ca, Sr, and Ti was 1 mol%, and a thermal treatment was applied in an oxygen stream at 300°C.

### <Example 3-5>

A test cell was produced in a manner similar to Example 3-1 except that the positive electrode active material was produced in the following manner, and the test cell was evaluated.
(1) In the baking step, Ca(OH)₂, Sr(OH)₂, and ZrO₂ were added such that the molar ratio of Ca with respect to the total amount of metal elements was 0.5 mol%, the molar ratio of Sr was 0.1 mol%, and the molar ratio of Zr was 0.3 mol%.
(2) In the water-wash step, the solid-to-liquid ratio was changed to 1500 g/L.
(3) H₃BO₃ was mixed to the lithium-transition metal composite oxide obtained in the water-wash step such that the molar ratio of B with respect to a total amount of Ni, Mn, Ca, Sr, and Zr was 0.5 mol%, and a thermal treatment was applied in an oxygen stream at 300°C.

### <Comparative Example 3-1>

A test cell was produced in a manner similar to Example 3-1 except that, in the production of the positive electrode active material, Sr was not added, and, in the baking step, Ca(OH)₂ and ZrO₂ were added such that the molar ratio of Ca with respect to the total amount of the metal elements was 0.5 mol% and the molar ratio of Zr was 0.2 mol%, and the test cell was evaluated. Through the SEM observation, it was found that adhering particles of massive shape having a long-side length of 0.5 µm and an aspect ratio of 1.2 were adhered to the surfaces of the secondary particles of the positive electrode active material.

### <Comparative Example 3-2>

A test cell was produced in a manner similar to Example 3-1 except that the positive electrode active material was produced in the following manner, and the test cell was evaluated.
(1) In the baking step, Ca(OH)₂, Sr(OH)₂, and WO₃ were added such that the molar ratio of Ca with respect to the total amount of metal elements was 0.5 mol%, the molar ratio of Sr was 0.2 mol%, and the molar ratio of W was 0.5 mol%.
(2) In the water-wash step, the solid-to-liquid ratio was changed to 1000 g/L, the water-wash time was changed to 1 minute, and the stirring rate was changed to 100 rpm.

### <Comparative Example 3-3>

A test cell was produced in a manner similar to Example 3-1 except that the positive electrode active material was produced in the following manner, and the test cell was evaluated.
(1) In the baking step, Ca(OH)₂, Sr(OH)₂, and Nb₂O₅ were added such that the molar ratio of Ca with respect to the total amount of metal elements was 1 mol%, the molar ratio of Sr was 0.1 mol%, and the molar ratio of Nb was 0.3 mol%.
(2) In the water-wash step, the solid-to-liquid ratio was changed to 1000 g/L, the water-wash time was changed to 1 minute, and the stirring rate was changed to 100 rpm.

### <Comparative Example 3-4>

A test cell was produced in a manner similar to Example 3-1 except that the positive electrode active material was produced in the following manner, and the test cell was evaluated.
(1) In the baking step, Ca(OH)₂, Sr(OH)₂, and TiO₂ were added such that the molar ratio of Ca with respect to the total amount of metal elements was 0.5 mol%, the molar ratio of Sr was 0.1 mol%, and the molar ratio of Ti was 0.3 mol%.
(2) In the water-wash step, the solid-to-liquid ratio was changed to 1000 g/L, the water-wash time was changed to 1 minute, and the stirring rate was changed to 100 rpm.
(3) H₃BO₃ was mixed to the lithium-transition metal composite oxide obtained in the water-wash step such that the molar ratio of B with respect to a total amount of Ni, Mn, Ca, Sr, and Ti was 1.5 mol%, and a thermal treatment was applied in an oxygen stream at 300°C.

### <Comparative Example 3-5>

A test cell was produced in a manner similar to Example 3-1 except that the positive electrode active material was produced in the following manner, and the test cell was evaluated.
(1) In the baking step, Ca(OH)₂, Sr(OH)₂, and ZrO₂ were added such that the molar ratio of Ca with respect to the total amount of metal elements was 1.0 mol%, the molar ratio of Sr was 0.3 mol%, and the molar ratio of Zr was 0.5 mol%.
(2) In the water-wash step, the solid-to-liquid ratio was changed to 1000 g/L, the water-wash time was changed to 1 minute, and the stirring rate was changed to 100 rpm.
(3) H₃BO₃ was mixed to the lithium-transition metal composite oxide obtained in the water-wash step such that the molar ratio of B with respect to a total amount of Ni, Mn, Ca, Sr, and Zr was 1.0 mol%, and a thermal treatment was applied in an oxygen stream at 300°C.

### <Example 4-1>

A test cell was produced in a manner similar to Example 1-1 except that the positive electrode active material was produced in the following manner, and the test cell was evaluated.
(1) A composite hydroxide represented by [Ni_{0.89}Co_{0.04}Mn_{0.05}Al_{0.02}](OH)₂ was used, and a metal oxide including Ni, Co, Mn, and Al was obtained.
(2) In the baking step, Ca(OH)₂ and Sr(OH)₂ were added such that the molar ratio of Ca with respect to the total amount of metal elements was 0.5 mol% and the molar ratio of Sr was 0.2 mol%.

As a result of measurement of the obtained positive electrode active material using the ICP atomic emission spectroscopy apparatus (iCAP6300 manufactured by Thermo Fisher Scientific Inc.), it was found that elements shown in Table 4 described below were present as elements other than Li and O. Through observation with the scanning electron microscope (SEM), it was found that adhering particles of fibrous shape having a long-side length of 0.4 µm and an aspect ratio of 12 were adhered to the surfaces of the secondary particles of the positive electrode active material. As a result of measurement of the element concentration distribution on the surface of the positive electrode active material through the time-of-flight secondary ion mass spectrometry (TOF-SIMS), Ca and Sr were detected, and it was found that the Gini coefficients of Ca and Sr on the secondary particle surface were 0.63 and 0.57, respectively.

### <Example 4-2>

A test cell was produced in a manner similar to Example 4-1 except that, in the baking step of the production of the positive electrode active material, Ca(OH)₂, Sr(OH)₂, and WO₃ were added such that the molar ratio of Ca with respect to the total amount of metal elements was 1.0 mol%, the molar ratio of Sr was 0.2 mol%, and the molar ratio of W was 0.5 mol%, and the test cell was evaluated.

### <Example 4-3>

A test cell was produced in a manner similar to Example 4-1 except that the positive electrode active material was produced in the following manner, and the test cell was evaluated.
(1) In the baking step, Ca(OH)₂, Sr(OH)₂, and Nb₂O₅ were added such that the molar ratio of Ca with respect to the total amount of metal elements was 0.5 mol%, the molar ratio of Sr was 0.1 mol%, and the molar ratio of Nb was 0.3 mol%.
(2) In the water-wash step, the solid-to-liquid ratio was changed to 750 g/L.

### <Example 4-4>

A test cell was produced in a manner similar to Example 4-1 except that the positive electrode active material was produced in the following manner, and the test cell was evaluated.
(1) In the baking step, Ca(OH)₂, Sr(OH)₂, and TiO₂ were added such that the molar ratio of Ca with respect to the total amount of metal elements was 1.0 mol%, the molar ratio of Sr was 0.2 mol%, and the molar ratio of Ti was 0.3 mol%.
(2) In the water-wash step, the solid-to-liquid ratio was changed to 1000 g/L, and the water-wash time was changed to 20 minutes.

### <Example 4-5>

A test cell was produced in a manner similar to Example 4-1 except that the positive electrode active material was produced in the following manner, and the test cell was evaluated.
(1) In the baking step, Ca(OH)₂, Sr(OH)₂, and ZrO₂ were added such that the molar ratio of Ca with respect to the total amount of metal elements was 0.5 mol%, the molar ratio of Sr was 0.1 mol%, and the molar ratio of Zr was 0.6 mol%.
(2) In the water-wash step, the solid-to-liquid ratio was changed to 1500 g/L, and the water-wash time was changed to 20 minutes.

### <Comparative Example 4-1>

A test cell was produced in a manner similar to Example 4-1 except that, in the production of the positive electrode active material, Sr was not added, and, in the baking step, Ca(OH)₂ was added such that the molar ratio of Ca with respect to the total amount of the metal elements was 1 mol%, and the test cell was evaluated. Through the SEM observation, it was found that adhering particles of massive shape having a long-side length of 0.5 µm and an aspect ratio of 1.4 were adhered to the surfaces of the secondary particles of the positive electrode active material.

### <Comparative Example 4-2>

A test cell was produced in a manner similar to Example 4-1 except that the positive electrode active material was produced in the following manner, and the test cell was evaluated.
(1) In the baking step, Ca(OH)₂, Sr(OH)₂, and WO₃ were added such that the molar ratio of Ca with respect to the total amount of metal elements was 0.5 mol%, the molar ratio of Sr was 0.1 mol%, and the molar ratio of W was 0.3 mol%.
(2) In the water-wash step, the solid-to-liquid ratio was changed to 1000 g/L, the water-wash time was changed to 1 minute, and the stirring rate was changed to 100 rpm.

### <Comparative Example 4-3>

A test cell was produced in a manner similar to Example 4-1 except that the positive electrode active material was produced in the following manner, and the test cell was evaluated.
(1) In the baking step, Ca(OH)₂, Sr(OH)₂, and Nb₂O₅ were added such that the molar ratio of Ca with respect to the total amount of metal elements was 0.5 mol%, the molar ratio of Sr was 0.2 mol%, and the molar ratio of Nb was 0.3 mol%.
(2) In the water-wash step, the solid-to-liquid ratio was changed to 1000 g/L, the water-wash time was changed to 1 minute, and the stirring rate was changed to 100 rpm.

### <Comparative Example 4-4>

A test cell was produced in a manner similar to Example 4-1 except that the positive electrode active material was produced in the following manner, and the test cell was evaluated.
(1) In the baking step, Ca(OH)₂, Sr(OH)₂, and TiO₂ were added such that the molar ratio of Ca with respect to the total amount of metal elements was 0.5 mol%, the molar ratio of Sr was 0.1 mol%, and the molar ratio of Ti was 0.5 mol%.
(2) In the water-wash step, the solid-to-liquid ratio was changed to 1000 g/L, the water-wash time was changed to 1 minute, and the stirring rate was changed to 100 rpm.

### <Comparative Example 4-5>

A test cell was produced in a manner similar to Example 4-1 except that the positive electrode active material was produced in the following manner, and the test cell was evaluated.
(1) In the baking step, Ca(OH)₂, Sr(OH)₂, and ZrO₂ were added such that the molar ratio of Ca with respect to the total amount of metal elements was 0.5 mol%, the molar ratio of Sr was 0.1 mol%, and the molar ratio of Zr was 0.3 mol%.
(2) In the water-wash step, the solid-to-liquid ratio was changed to 1000 g/L, the water-wash time was changed to 1 minute, and the stirring rate was changed to 100 rpm.

### <Example 5-1>

A test cell was produced in a manner similar to Example 1-1 except that the positive electrode active material was produced in the following manner, and the test cell was evaluated.
(1) A composite hydroxide represented by [Ni_{0.90}Mn_{0.05}Al_{0.05}](OH)₂ was used, and a metal oxide including Ni, Mn, and Al was obtained.
(2) In the baking step, Ca(OH)₂ and Sr(OH)₂ were added such that the molar ratio of Ca with respect to the total amount of metal elements was 0.5 mol% and the molar ratio of Sr was 0.1 mol%.

As a result of measurement of the obtained positive electrode active material using the ICP atomic emission spectroscopy apparatus (iCAP6300 manufactured by Thermo Fisher Scientific Inc.), it was found that elements shown in Table 5 described below were present as elements other than Li and O. Through observation with the scanning electron microscope (SEM), it was found that adhering particles of fibrous shape having a long-side length of 0.7 µm and an aspect ratio of 10 were adhered to the surfaces of the secondary particles of the positive electrode active material. As a result of measurement of the element concentration distribution on the surface of the positive electrode active material through the time-of-flight secondary ion mass spectrometry (TOF-SIMS), Ca and Sr were detected, and it was found that the Gini coefficients of Ca and Sr on the secondary particle surface were 0.63 and 0.66, respectively.

### <Example 5-2>

A test cell was produced in a manner similar to Example 5-1 except that, in the baking step of the production of the positive electrode active material, Ca(OH)₂, Sr(OH)₂, and WO₃ were added such that the molar ratio of Ca with respect to the total amount of metal elements was 0.7 mol%, the molar ratio of Sr was 0.1 mol%, and the molar ratio of W was 0.3 mol%, and the test cell was evaluated.

### <Example 5-3>

A test cell was produced in a manner similar to Example 5-1 except that, in the baking step of the production of the positive electrode active material, Ca(OH)₂, Sr(OH)₂, and Nb₂O₅ were added such that the molar ratio of Ca with respect to the total amount of metal elements was 0.7 mol%, the molar ratio of Sr was 0.1 mol%, and the molar ratio of Nb was 0.3 mol%, and the test cell was evaluated.

### <Example 5-4>

A test cell was produced in a manner similar to Example 5-1 except that, in the baking step of the production of the positive electrode active material, Ca(OH)₂, Sr(OH)₂, and TiO₂ were added such that the molar ratio of Ca with respect to the total amount of metal elements was 0.7 mol%, the molar ratio of Sr was 0.1 mol%, and the molar ratio of Ti was 0.3 mol%, and the test cell was evaluated.

### <Example 5-5>

A test cell was produced in a manner similar to Example 5-1 except that, in the baking step of the production of the positive electrode active material, Ca(OH)₂, Sr(OH)₂, and ZrO₂ were added such that the molar ratio of Ca with respect to the total amount of metal elements was 0.7 mol%, the molar ratio of Sr was 0.1 mol%, and the molar ratio of Zr was 0.5 mol%, and the test cell was evaluated.

### <Comparative Example 5-1>

A test cell was produced in a manner similar to Example 5-1 except that, in the production of the positive electrode active material, Sr was not added, and, in the baking step, Ca(OH)₂ was added such that the molar ratio of Ca with respect to the total amount of the metal elements was 1.0 mol%, and the test cell was evaluated. Through the SEM observation, it was found that adhering particles of massive shape having a long-side length of 0.5 µm and an aspect ratio of 1.5 were adhered to the surfaces of the secondary particles of the positive electrode active material.

### <Comparative Example 5-2>

A test cell was produced in a manner similar to Example 5-1 except that the positive electrode active material was produced in the following manner, and the test cell was evaluated.
(1) In the baking step, Ca(OH)₂, Sr(OH)₂, and WO₃ were added such that the molar ratio of Ca with respect to the total amount of metal elements was 0.7 mol%, the molar ratio of Sr was 0.2 mol%, and the molar ratio of W was 0.3 mol%.
(2) In the water-wash step, the solid-to-liquid ratio was changed to 1000 g/L, the water-wash time was changed to 1 minute, and the stirring rate was changed to 100 rpm.

### <Comparative Example 5-3>

A test cell was produced in a manner similar to Example 5-1 except that the positive electrode active material was produced in the following manner, and the test cell was evaluated.
(1) In the baking step, Ca(OH)₂, Sr(OH)₂, and Nb₂O₅ were added such that the molar ratio of Ca with respect to the total amount of metal elements was 0.7 mol%, the molar ratio of Sr was 0.2 mol%, and the molar ratio of Nb was 0.3 mol%.
(2) In the water-wash step, the solid-to-liquid ratio was changed to 1000 g/L, the water-wash time was changed to 1 minute, and the stirring rate was changed to 100 rpm.

### <Example 6>

A test cell was produced in a manner similar to Example 1-1 except that the positive electrode active material was produced in the following manner, and the test cell was evaluated.
(1) A composite hydroxide represented by [Ni_{0.80}Mn_{0.20}](OH)₂ was used, and a metal oxide including Ni and Mn was obtained.
(2) In the baking step, Ca(OH)₂, Sr(OH)₂, and Nb₂O₅ were added such that the molar ratio of Ca with respect to the total amount of metal elements was 0.5 mol%, the molar ratio of Sr was 0.1 mol%, and the molar ratio of Nb was 0.3 mol%, and lithium hydroxide was mixed such that the molar ratio of Li with respect to the total amount of Ni, Mn, Ca, Sr, and Nb was 113 mol%.

As a result of measurement of the obtained positive electrode active material using the ICP atomic emission spectroscopy apparatus (iCAP6300 manufactured by Thermo Fisher Scientific Inc.), it was found that elements shown in Table 6 described below were present as elements other than Li and O. Through observation with the scanning electron microscope (SEM), it was found that adhering particles of fibrous shape having a long-side length of 0.3 µm and an aspect ratio of 10 were adhered to the surfaces of the secondary particles of the positive electrode active material. As a result of measurement of the element concentration distribution on the surface of the positive electrode active material through the time-of-flight secondary ion mass spectrometry (TOF-SIMS), Ca and Sr were detected, and it was found that the Gini coefficients of Ca and Sr on the secondary particle surface were 0.63 and 0.62, respectively.

### <Comparative Example 6>

A test cell was produced in a manner similar to Example 6 except that, in the production of the positive electrode active material, Sr was not added, and, in the baking step, Ca(OH)₂ was added such that the molar ratio of Ca with respect to the total amount of the metal elements was 1.0 mol%, and the test cell was evaluated. Through the SEM observation, it was found that adhering particles of massive shape having a long-side length of 1.5 µm and an aspect ratio of 1.5 were adhered to the surfaces of the secondary particles of the positive electrode active material.

### <Example 7>

A test cell was produced in a manner similar to Example 1-1 except that the positive electrode active material was produced in the following manner, and the test cell was evaluated.
(1) A composite hydroxide represented by [Ni_{0.80}Co_{0.10}Mn_{0.10}](OH)₂ was used, and a metal oxide including Ni, Co, and Mn was obtained.
(2) In the baking step, Ca(OH)₂, Sr(OH)₂, and TiO₂ were added such that the molar ratio of Ca with respect to the total amount of metal elements was 0.5 mol%, the molar ratio of Sr was 0.1 mol%, and the molar ratio of Ti was 0.5 mol%, and lithium hydroxide was mixed such that the molar ratio of Li with respect to the total amount of Ni, Co, Mn, Ca, Sr, and Ti was 105 mol%.

As a result of measurement of the obtained positive electrode active material using the ICP atomic emission spectroscopy apparatus (iCAP6300 manufactured by Thermo Fisher Scientific Inc.), it was found that elements shown in Table 7 described below were present as elements other than Li and O. Through observation with the scanning electron microscope (SEM), it was found that adhering particles of fibrous shape having a long-side length of 0.5 µm and an aspect ratio of 10 were adhered to the surfaces of the secondary particles of the positive electrode active material. As a result of measurement of the element concentration distribution on the surface of the positive electrode active material through the time-of-flight secondary ion mass spectrometry (TOF-SIMS), Ca and Sr were detected, and it was found that the Gini coefficients of Ca and Sr on the secondary particle surface were 0.53 and 0.59, respectively.

### <Comparative Example 7>

A test cell was produced in a manner similar to Example 7 except that, in the production of the positive electrode active material, Sr was not added, and, in the baking step, Ca(OH)₂ was added such that the molar ratio of Ca with respect to the total amount of the metal elements was 0.7 mol%, and the test cell was evaluated. Through the SEM observation, it was found that adhering particles of massive shape having a long-side length of 2 µm and an aspect ratio of 1.0 were adhered to the surfaces of the secondary particles of the positive electrode active material.

### <Example 8>

A test cell was produced in a manner similar to Example 1-1 except that the positive electrode active material was produced in the following manner, and the test cell was evaluated.
(1) A composite hydroxide represented by [Ni_{0.50}Co_{0.20}Mn_{0.30}](OH)₂ was used, and a metal oxide including Ni, Co, and Mn was obtained.
(2) In the baking step, Ca(OH)₂, Sr(OH)₂, and TiO₂ were added such that the molar ratio of Ca with respect to the total amount of metal elements was 0.5 mol%, the molar ratio of Sr was 0.2 mol%, and the molar ratio of Ti was 1.0 mol%, and lithium hydroxide was mixed such that the molar ratio of Li with respect to the total amount of Ni, Co, Mn, Ca, Sr, and Ti was 115 mol%.

As a result of measurement of the obtained positive electrode active material using the ICP atomic emission spectroscopy apparatus (iCAP6300 manufactured by Thermo Fisher Scientific Inc.), it was found that elements shown in Table 8 described below were present as elements other than Li and O. Through observation with the scanning electron microscope (SEM), it was found that adhering particles of fibrous shape having a long-side length of 0.7 µm and an aspect ratio of 15 were adhered to the surfaces of the secondary particles of the positive electrode active material. As a result of measurement of the element concentration distribution on the surface of the positive electrode active material through the time-of-flight secondary ion mass spectrometry (TOF-SIMS), Ca and Sr were detected, and it was found that the Gini coefficients of Ca and Sr on the secondary particle surface were 0.51 and 0.55, respectively.

### <Comparative Example 8>

A test cell was produced in a manner similar to Example 8 except that, in the production of the positive electrode active material, Sr was not added, and, in the baking step, Ca(OH)₂ was added such that the molar ratio of Ca with respect to the total amount of the metal elements was 1.0 mol%, and the test cell was evaluated. Through the SEM observation, it was found that adhering particles of massive shape having a long-side length of 3 µm and an aspect ratio of 1.0 were adhered to the surfaces of the secondary particles of the positive electrode active material.

Tables 1 to 8 show evaluation results for the test cells of Examples and Comparative Examples. The durability of each test cell in Tables 1 to 8 is a relative value with the durability of a reference test cell in each table as having a value of 100. The reference test cells of Tables 1 to 8 are Comparative Example 1-1, Comparative Example 2-5, Comparative Example 3-4, Comparative Example 4-4, Comparative Example 5-3, Comparative Example 6, Comparative Example 7, and Comparative Example 8, respectively.

**[Table 1]**

| | Elements in positive electrode active material | Adhering particles | | | | Gini coef. on secondary particle surface | | Durability |
|---|---|---|---|---|---|---|---|---|
| | | Contained e lement | Shape | Long-side length [µm] | Aspect ratio | Ca | Sr | |
| Example 1-1 | Ni, Co, Al, Ca, Sr | Ca, Sr | Fibrous | 0.3 | 40 | 0.60 | 0.58 | 110 |
| Example 1-2 | Ni, Co, Al, Ca, Sr, Zr | Ca, Sr, Al | Fibrous | 0.2 | 21 | 0.59 | 0.61 | 109 |
| Example 1-3 | Ni, Co, Al, Ca, Sr, Ti | Ca, Sr | Fibrous | 0.15 | 10 | 0.63 | 0.60 | 108 |
| Example 1-4 | Ni, Co, Al, Ca, Sr, W | Ca, Sr | Fibrous | 0.2 | 12 | 0.65 | 0.64 | 107 |
| Example 1-5 | Ni, Co, Al, Ca, Sr, Nb | Ca, Sr, Al | Fibrous | 0.5 | 16 | 0.67 | 0.75 | 103 |
| Comparative Example 1-1 | Ni, Co, Al, Ca | Ca | Massive | 0.5 | 1.0 | 0.71 | - | 100 |
| Comparative Example 1-2 | Ni, Co, Al, Sr | Sr, Al | Massive | 0.5 | 1.3 | - | 0.85 | 91 |

**[Table 2]**

| | Elements in positive electrode active material | Adhering particles | | | | Gini coef. on secondary particle surface | | Durability |
|---|---|---|---|---|---|---|---|---|
| | | Contained element | Shape | Long-side length [µm] | Aspect ratio | Ca | Sr | |
| Example 2-1 | Ni, Co, Mn, Ca, Sr | Ca, Sr | Fibrous | 0.27 | 30 | 0.59 | 0.58 | 110 |
| Example 2-2 | Ni, Co, Mn, Ca, Sr, Zr | Ca, Sr | Fibrous | 0.5 | 20 | 0.60 | 0.61 | 109 |
| Example 2-3 | Ni, Co, Mn, Ca, Sr, Nb | Ca, Sr | Fibrous | 0.5 | 15 | 0.66 | 0.63 | 108 |
| Example 2-4 | Ni, Co, Mn, Ca, Sr, Ti | Ca, Sr | Fibrous | 0.7 | 20 | 0.57 | 0.64 | 106 |
| Example 2-5 | Ni, Co, Mn, Ca, Sr, Ti, B | Ca, Sr | Fibrous | 0.7 | 20 | 0.60 | 0.66 | 105 |
| Example 2-6 | Ni, Co, Mn, Ca, Sr, Zr, B | Ca, Sr, B | Fibrous | 0.5 | 13 | 0.55 | 0.60 | 105 |
| Comparative example 2-1 | Ni, Co, Mn, Ca | Ca | Massive | 0.5 | 1.5 | 0.79 | - | 97 |
| Comparative Example 2-2 | Ni, Co, Mn, Sr | Sr | Massive | 1 | 1.0 | - | 0.88 | 92 |
| Comparative Example 2-3 | Ni, Co, Mn, Ca, Sr, Nb | Ca, Sr | Massive | 0.5 | 5.0 | 0.75 | 0.69 | 97 |
| Comparative Example 2-4 | Ni, Co, Mn, Ca, Sr, Ti | Ca, Sr | Massive | 0.4 | 5.0 | 0.56 | 0.64 | 98 |
| Comparative Example 2-5 | Ni, Co, Mn, Ca, Sr, Zr | Ca, Sr | Massive | 0.5 | 5.0 | 0.69 | 0.68 | 100 |

**[Table 3]**

| | Elements in positive electrode active material | Adhering particles | | | | Gini coef. on secondary particle surface | | Durability |
|---|---|---|---|---|---|---|---|---|
| | | Contained element | Shape | Long-side length [µm] | Aspect ratio | Ca | Sr | |
| Example 3-1 | Ni, Mn, Ca, Sr | Ca, Sr | Fibrous | 0.4 | 12 | 0.55 | 0.62 | 108 |
| Example 3-2 | Ni, Mn, Ca, Sr, W | Ca, Sr | Fibrous | 0.3 | 20 | 0.45 | 0.61 | 109 |
| Example 3-3 | Ni, Mn, Ca, Sr, Nb | Ca, Sr | Fibrous | 0.5 | 15 | 0.43 | 0.59 | 108 |
| Example 3-4 | Ni, Mn, Ca, Sr, Ti, B | Ca, Sr, B | Fibrous | 0.3 | 20 | 0.65 | 0.56 | 109 |
| Example 3-5 | Ni, Mn, Ca, Sr, Zr, B | Ca, Sr | Fibrous | 0.7 | 15 | 0.58 | 0.62 | 103 |
| Comparative Example 3-1 | Ni, Mn, Ca, Zr | Ca | Massive | 0.5 | 1.2 | 0.56 | - | 96 |
| Comparative Example 3-2 | Ni, Mn, Ca, Sr, W | Ca, Sr | Massive | 0.5 | 4.0 | 0.71 | 0.75 | 95 |
| Comparative Example 3-3 | Ni, Mn, Ca, Sr, Nb | Ca, Sr | Massive | 0.5 | 4.0 | 0.55 | 0.81 | 98 |
| Comparative Example 3-4 | Ni, Mn, Ca, Sr, Ti, B | Ca, Sr | Massive | 0.4 | 3.0 | 0.73 | 0.71 | 100 |
| Comparative Example 3-5 | Ni, Mn, Ca, Sr, Zr, B | Ca, Sr | Massive | 0.5 | 2.0 | 0.77 | 0.59 | 98 |

**[Table 4]**

| | Elements in positive electrode active material | Adhering particles | | | | Gini coef. on secondary particle surface | | Durability |
|---|---|---|---|---|---|---|---|---|
| | | Contained element | Shape | Long-side length [µm] | Aspect ratio | Ca | Sr | |
| Example 4-1 | Ni, Co, Mn, Al, Ca, Sr | Ca, Sr | Fibrous | 0.4 | 12 | 0.63 | 0.57 | 105 |
| Example 4-2 | Ni, Co, Mn, Al, Ca, Sr, W | Ca, Sr | Fibrous | 0.3 | 12 | 0.65 | 0.55 | 103 |
| Example 4-3 | Ni, Co, Mn, Al, Ca, Sr, Nb | Ca, Sr | Fibrous | 0.5 | 15 | 0.56 | 0.55 | 106 |
| Example 4-4 | Ni, Co, Mn, Al, Ca, Sr, Ti | Ca, Sr | Fibrous | 0.3 | 20 | 0.43 | 0.59 | 109 |
| Example 4-5 | Ni, Co, Mn, Al, Ca, Sr, Zr | Ca, Sr | Fibrous | 0.3 | 20 | 0.55 | 0.53 | 109 |
| Comparative Example 4-1 | Ni, Co, Mn, Al, Ca | Ca | Massive | 0.5 | 1.4 | 0.79 | - | 96 |
| Comparative Example 4-2 | Ni, Co, Mn, Al, Ca, Sr, W | Ca, Sr | Massive | 0.5 | 4.0 | 0.76 | 0.74 | 97 |
| Comparative Example 4-3 | Ni, Co, Mn, Al, Ca, Sr, Nb | Ca, Sr | Massive | 0.5 | 4.0 | 0.55 | 0.81 | 98 |
| Comparative Example 4-4 | Ni, Co, Mn, Al, Ca, Sr, Ti | Ca, Sr | Massive | 0.4 | 3.0 | 0.74 | 0.73 | 100 |
| Comparative Example 4-5 | Ni, Co, Mn, Al, Ca, Sr, Zr | Ca, Sr | Massive | 0.5 | 2.0 | 0.59 | 0.62 | 98 |

**[Table 5]**

| | Elements in positive electrode active material | Adhering particles | | | | Gini coef. on secondary particle surface | | Durability |
|---|---|---|---|---|---|---|---|---|
| | | Contained element | Shape | Long-side length [µm] | Aspect ratio | Ca | Sr | |
| Example 5-1 | Ni, Mn, Al, Ca, Sr | Ca, Sr | Fibrous | 0.7 | 10 | 0.63 | 0.66 | 103 |
| Example 5-2 | Ni, Mn, Al, Ca, Sr, W | Ca, Sr | Fibrous | 0.7 | 10 | 0.60 | 0.67 | 103 |
| Example 5-3 | Ni, Mn, Al, Ca, Sr, Nb | Ca, Sr | Fibrous | 0.3 | 20 | 0.57 | 0.59 | 107 |
| Example 5-4 | Ni, Mn, Al, Ca, Sr, Ti | Ca, Sr | Fibrous | 0.3 | 20 | 0.61 | 0.57 | 106 |
| Example 5-5 | Ni, Mn, Al, Ca, Sr, Zr | Ca, Sr | Fibrous | 0.5 | 15 | 0.58 | 0.60 | 105 |
| Comparative Example 5-1 | Ni, Mn, Al, Ca | Ca | Massive | 0.5 | 1.5 | 0.71 | - | 97 |
| Comparative Example 5-2 | Ni, Mn, Al, Ca, Sr, W | Ca, Sr | Massive | 2 | 1.0 | 0.73 | 0.79 | 98 |
| Comparative Example 5-3 | Ni, Mn, Al, Ca, Sr, Nb | Ca, Sr | Massive | 2 | 2.0 | 0.62 | 0.77 | 100 |

**[Table 6]**

| | Elements in positive electrode active material | Adhering particles | | | | Gini coef. on secondary particle surface | | Durability |
|---|---|---|---|---|---|---|---|---|
| | | Contained element | Shape | Long-side length [µm] | Aspect ratio | Ca | Sr | |
| Example 6 | Ni, Mn, Ca, Sr, Nb | Ca, Sr | Fibrous | 0.3 | 10 | 0.63 | 0.62 | 102 |
| Comparative Example 6 | Ni, Mn, Ca, Nb | Ca | Massive | 1.5 | 1.5 | 0.79 | - | 100 |

**[Table 7]**

| | Elements in positive electrode a ctive material | Adhering particles | | | | Gini coef. on secondary particle surface | | Durability |
|---|---|---|---|---|---|---|---|---|
| | | Contained element | Shape | Long-side length [µm] | Aspect ratio | Ca | Sr | |
| Example 7 | Ni, Co, Mn, Ca, Sr, Ti | Ca, Sr | Fibrous | 0.5 | 10 | 0.53 | 0.59 | 103 |
| Comparative Example 7 | Ni, Co, Mn, Ca, Ti | Ca | Massive | 2 | 1.0 | 0.72 | - | 100 |

**[Table 8]**

| | Elements in positive electrode a ctive material | Adhering particles | | | | Gini coef. on secondary particle surface | | Durability |
|---|---|---|---|---|---|---|---|---|
| | | Contained element | Shape | Long-side length [µm] | Aspect ratio | Ca | Sr | |
| Example 8 | Ni, Co, Mn, Ca, Sr, Ti | Ca, Sr | Fibrous | 0.7 | 15 | 0.51 | 0.55 | 102 |
| Comparative Example 8 | Ni, Co, Mn, Ca, Ti | Ca | Massive | 3 | 1.0 | 0.76 | - | 100 |

It can be seen that, in all of Tables 1 to 8, the test cells of Examples have higher durability than the test cells of Comparative Examples. Therefore, it can be understood that the durability of the battery can be improved by the fibrous particle including Ca and Sr being present on the surfaces of the secondary particles of the lithium-transition metal composite oxide.

The present disclosure is described further with the following embodiments.

Configuration 1: A positive electrode active material for non-aqueous electrolyte secondary battery, comprising: a lithium-transition metal composite oxide, wherein the lithium-transition metal composite oxide contains Ni, Ca, and Sr, and includes secondary particles formed by aggregation of primary particles, and an adhering particle including a fibrous particle is present on surfaces of the secondary particles, and the fibrous particle includes at least one of Ca or Sr.

Configuration 2: The positive electrode active material for non-aqueous electrolyte secondary battery according to Configuration 1, wherein a content of Ni in the lithium-transition metal composite oxide is greater than or equal to 50 mol% with respect to a total number of moles of elements other than Li and O.

Configuration 3: The positive electrode active material for non-aqueous electrolyte secondary battery according to Configuration 1 or 2, wherein a long-side length of the fibrous particle is less than or equal to 3 µm.

Configuration 4: The positive electrode active material for non-aqueous electrolyte secondary battery according to any one of Configurations 1 to 3, wherein an aspect ratio of the fibrous particle is greater than or equal to 10.

Configuration 5: The positive electrode active material for non-aqueous electrolyte secondary battery according to any one of Configurations 1 to 4, wherein each of Ca and Sr is uniformly present on the surfaces of the secondary particles.

Configuration 6: A non-aqueous electrolyte secondary battery comprising: a positive electrode containing the positive electrode active material for non-aqueous electrolyte secondary battery according to any one of Configurations 1 to 5; a negative electrode; and a non-aqueous electrolyte.

### REFERENCE SIGNS LIST

10 secondary battery, 11 positive electrode, 12 negative electrode, 13 separator, 14 electrode assembly, 16 housing member, 17 sealing assembly, 18, 19 insulating plate, 20 positive electrode lead, 21 negative electrode lead, 22 groove portion, 23 internal terminal plate, 24 lower vent member, 25 insulating member, 26 upper vent member, 27 cap, 28 gasket.

## Claims

1. A positive electrode active material for non-aqueous electrolyte secondary battery, comprising:
a lithium-transition metal composite oxide, wherein
the lithium-transition metal composite oxide contains Ni, Ca, and Sr, and includes secondary particles formed by aggregation of primary particles, and
an adhering particle including a fibrous particle is present on surfaces of the secondary particles, and the fibrous particle contains at least one of Ca or Sr.

2. The positive electrode active material for non-aqueous electrolyte secondary battery according to claim 1, wherein
a content of Ni in the lithium-transition metal composite oxide is greater than or equal to 50 mol% with respect to a total number of moles of elements other than Li and O.

3. The positive electrode active material for non-aqueous electrolyte secondary battery according to claim 1, wherein
a long-side length of the fibrous particle is less than or equal to 3 µm.

4. The positive electrode active material for non-aqueous electrolyte secondary battery according to claim 1, wherein
an aspect ratio of the fibrous particle is greater than or equal to 10.

5. The positive electrode active material for non-aqueous electrolyte secondary battery according to claim 1, wherein
each of Ca and Sr is uniformly present on the surfaces of the secondary particles.

6. A non-aqueous electrolyte secondary battery comprising:
a positive electrode containing the positive electrode active material for non-aqueous electrolyte secondary battery according to any one of claims 1 to 5;
a negative electrode; and
a non-aqueous electrolyte.
